# EUROPÄISCHE PATENTSCHRIFT

(11) **EP 0 576 417 B1**
(45) Veröffentlichungstag und Bekanntmachung des Hinweises auf die Patenterteilung: **19.03.1997**
(21) Anmeldenummer: 93890126.1
(22) Anmeldetag: 23.06.1993
(51) Int. Cl.: A01B 17/00, A01B 71/06

(54) **Drehpflug mit Antriebseinrichtung**
Reversible plough with driving device
Charrue réversible avec dispositif d'entraînement

(30) Priorität: 23.06.1992 AT 1281/92
(43) Veröffentlichungstag der Anmeldung: 29.12.1993
(73) Patentinhaber: Schiefermair, Augustinus, A-4521 Schiedlberg (AT)
(72) Erfinder: Schiefermair, Augustinus, A-4521 Schiedlberg (AT)
(74) Vertreter: Petra, Elke, Dipl.-Ing.

(56) Entgegenhaltungen:
- EP-A- 0 428 495
- DE-C- 881 122
- FR-A- 674 099
- FR-A- 1 021 158
- FR-A- 2 271 951
- GB-A- 928 627
- PATENT ABSTRACTS OF JAPAN vol. 009, no. 322 (M-440)18. Dezember 1985 & JP-A-60 155 041 ( ISEKI NOKI ) 14. August 1985

## Beschreibung

Die Erfindung betrifft einen Drehpflug mit mindestens einer Pflugschar und mit einer Antriebseinrichtung, welche an ein mit einem an einen Traktor anschließbaren Pfluganbaubock verbundenes Grindel angeschlossen ist, sowie mindestens einem jedem Pflugkörper jeder Pflugschar furchenseitig zugeordneten Zerkleinerungswerkzeug, welches von einer Zapfwelle des Traktors über eine mit einem Getriebe versehene Antriebswelle antreibbar ist.

Bei Drehpflügen mit Antriebseinrichtungen dieser Art wie sie z.B. in der EP-A-0 428 495 beschrieben sind, besteht die Schwierigkeit, den Antrieb vom Traktor zu lösen, da für diesen Antrieb der Pfluganbaubock im Wege steht. Auch muß für die Zerkleinerungswerkzeuge nach dem Drehen des Pfluges das Getriebe für die Antriebswelle der Zerkleinerungswerkzeuge in einem eigenen Arbeitsgang umgeschaltet werden, damit die Zerkleinerungswerkzeuge ihre optimale Wirkung entfalten. Wird die Umschaltung des Getriebes unterlassen, können die Zerkleinerungswerkzeuge ihre Aufgabe nur in vermindertem Ausmaß oder gar nicht erfüllen.

Die Aufgabe der vorliegenden Erfindung, bestellt darin, diese Nachteile zu vermeiden und ein optimales Anschließen der Antriebseinrichtung und Arbeiten der Zerkleinerungswerkzeuge zu erzielen. Dies wird erfindungsgemäß dadurch erreicht, daß das Getriebe, zwischen dem Pfluganbaubock und dem Traktor angeordnet, vom Traktor insbesondere lösbar, angebracht ist und die Abtriebswelle des Getriebes, die gegebenenfalls tiefer als der Pfluganbaubock liegt, mit der Antriebswelle für das Zerkleinerungswerkzeug, vorzugsweise über ein Gelenk od.dgl., antriebsmäßig verbunden ist. Durch Anordnung der Abtriebswelle tiefer als der Anbaubock und der Antriebswelle für die Zerkleinerungswerkzeuge, frei verlaufend unterhalb des Anbaubockes ist ein problemloses Drehen des Drehpfluges um die Längsachse des Grindels möglich. Desweiteren ist das Getriebe, zur Umkehr der Drehrichtung der Antriebswelle des Zerkleinerungswerkzeuges, über zumindest ein mit einem beim Drehen des Pfluges bewegten Teil verbundenes flexibles Verbindungselement umschaltbar. Damit wird gleichzeitig mit der Drehung des Pfluges bzw. von dessen Grindel in die zweite Arbeitsstellung, das Getriebe für den Antrieb der Zerkleinerungswerkzeuge auf den gegensinnigen Umlaufsinn der Zerkleinerungswerkzeuge umgeschaltet, sodaß deren volle Wirksamkeit in beiden Arbeitsstellungen des Drehpfluges erhalten bleibt. Auch ein Vergessen des Umschaltens ist dadurch sicher verhindert. Darüberhinaus bedeutet die erfindungsgemäße Koppelung von Drehung des Pfluges mit dem Umschalten des Getriebes eine Arbeitsvereinfachung und Zeitersparnis.

Vorzugsweise ist der beim Drehen des Pfluges aus einer Arbeitsstellung der Pflugscharen in die zweite Arbeitsstellung, in der die bezüglich des Grindels gegenüberliegenden Pflugscharen Bodenkontakt haben, bewegte Teil als ein die Drehung des Grindels um seine Längsachse bewirkendes Hydraulikaggregat (Kolben/Zylinderaggregat) ausgebildet, das zwischen dem Pfluganbaubock und dem Grindel eingesetzt ist und in den unterschiedlichen Schwenklagen des Grindels unterschiedliche räumliche Lagen einnimmt. Das aufgrund der Ausstattung der Traktoren mit Hydraulikaggregaten vorzugsweise zum Drehen des Grindels verwendete Hydraulikaggregat weist den Vorteil auf, daß das der Verbindungsstelle seines Zylinders mit dem Pfluganbaubock entgegengesetzte Ende (das ist das Ende der Kolbenstange) beim Drehen des Grindels einen großen Weg zurücklegt, sodaß diese Bewegung leicht in die Ulnschaltbewegungen für das Getriebe umgesetzt werden kann. Dabei ist keinerlei Ungenauigkeiten bedingendes Übersetzen notwendig.

Eine besonders einfache und funktionssichere Konstruktion ergibt sich, wenn das flexible Verbindungselement von zwei Seilzügen, Drähten od.dgl. Zugelementen gebildet ist, wobei die einen Enden der Zugelemente mit dem Hydraulikaggregat, vorzugsweise mit dessen Zylinder, an einander gegenüberliegenden Stellen des Zylinders verbunden sind und mit ihren anderen Enden an einem Umschaltelement des Getriebes, vorzugsweise elastisch angreifen. Durch diese Konstruktion werden die beiden das Verbindungselement bildenden Seile des Seilzuges bezüglich des Anbringungspunktes am Zylinder des Hydraulikaggregates gleichsinnig bewegt und diese Bewegung ist zur Umschaltung des Getriebes auf die entgegengesetzte Drehrichtung ausnützbar. Die Anbringung am Zylinder des Hydraulikaggregates wird in vorteilhafter Weise deswegen gewählt, da die Verbindungsstellen in diesem Fall keine radialen Bewegungskomponenten aufweisen, die sich der Umschaltbewegung überlagern können. Es sei darauf hingewiesen, daß die Ausführung der Verbindung der Zugelemente mit dem Zylinder des Hydraulikaggregates im wesentlichen beliebig ist und durch Verschrauben oder Verschweißen oder durch Klemmen erfolgen kann. Letztere Variante ergibt die geringsten Kosten und erlaubt auch die Nachrüstung bereits bestehender Drehpflüge mit der erfindungsgemäßen Einrichtung.

Um Beschädigungen des Getriebes durch unzulässig hohe Kräfte zu vermeiden, die während des Schaltvorganges bei ungünstiger Stellung einzelner Zahnräder zueinander auftreten können, ist vorgesehen, daß die einen Enden der Seite der beiden Seilzüge bzw. Drähte od.dgl. Zugelemente elastisch (längselastisch) am Umschaltelement des Getriebes angreifen. Dadurch wird die Umschaltung erst durchgeführt, wenn die Zahnräder der Umschaltstufe des Getriebes einwandfrei kämmen. Im gegenteiligen Fall treten zwar hohe Kräfte auf, das Schaltelement wird jedoch durch die elastische Verbindung erst verzögert betätigt.

Ein langer und damit sicherer Schaltweg bei geringen Abmessungen ist dadurch erzielbar, daß das Umschaltelement eine Scheibe, ein Rad od.dgl. ist. Die Drehachse dieser Elemente ist dabei normal auf die Ebene der Seile, Drähte od.dgl. orientiert. Natürlich sind für diese Definition nur die unmittelbar an das Schaltelement anschließenden Bereiche des Verbindungselementes zu berücksichtigen.

Eine beschädigungssichere und anderseits auch leicht justierbare Konstruktion ergibt sich, wenn die zwei Seile des Seilzuges, die Drähte od.dgl. durch ein das Umschaltelement über einen Teil seines Umfanges umschlingendes Zwischenstück miteinander verbunden sind.

Die bereits erwähnte, beschädigungsvermeidende Verzögerung zwischen einer Drehung des Grindels und derjenigen des Umschaltelementes, ist bei der zuvor beschriebenen Variante dadurch möglich, daß das Zwischenstück durch zumindest eine, vorzugsweise zwei, nebeneinanderliegende Schraubenfedern oder ähnliche elastische (längselastische) Elemente gebildet ist.

Eine mit weniger Bauteilen auskommende Alternative zur oben genannten Ausführungsform besteht darin, daß jeder Seilzug als Bowdenzug ausgebildet ist, wobei der Außenmantel (Schlauch) jeweils zwischen einer vorzugsweise seitlichen, vom Anbaubock abstehenden Lasche und einer mit dem Getriebe fest verbundenen Halterung eingespannt ist und das Innenseil einenends mit dem beweglichen Teil des Pfluges, insbesondere dem Zylinder des Hydraulikaggregates und andernends mit dem Schaltelement des Getriebes vorzugsweise elastisch verbunden ist.

Bei beiden genannten Ausführungsformen kann das Umschaltelement aber auch ein Hebel, Schieber od.dgl. sein, dessen mit dem flexiblen Verbindungselement verbundenes Ende im wesentlichen geradlinig verschiebbar ist.

Um die Drehbewegung des Grindels an die benötigte Bewegung zur Umschaltung des Getriebes anpassen zu können, ist gemäß einem weiteren Merkmal der Erfindung das flexible Verbindungselement an unterschiedlichen Stellen lösbar mit dem beweglichen Teil des Pfluges, insbesondere mit dem Zylinder des Hydraulikaggregates (Kolben/Zylinderaggregat) verbindbar.

Eine weitere Ausführungsform des Erfindungsgegenstandes sieht vor, daß zur lösbaren Befestigung des Getriebes am Traktor ein Scharnier mit im wesentlichen vertikalen ausziehbaren Scharnierbolzen vorgesehen ist, wobei ein Scharnierteil fest mit dem Traktor verbunden ist und der andere Scharnierteil als Tragkorb für das Getriebe ausgebildet ist. Bei dieser Ausführungsform ist das Getriebe während der Zeit, in der der Pflug an den Traktor, nämlich dessen Dreipunkthydraulik, angeschlossen ist, am Traktor gelagert. Vor der Trennung des Pfluges vom Traktor wird das Getriebe durch Ausziehen des Scharnierbolzens vom Traktor getrennt. Das Getriebe wird dann am Pflug temporär gehalten. Da die Verbindungselemente zwischen dem Getriebe und dem beim Drehen des Grindels mitbewegten Teil am Pflug flexibel sind, bereitet die Montage des Getriebes am Traktor - auch wenn sie nur für die Zeit des Pflügens vorgenommen wird -, keine Schwierigkeit. Es bedarf dabei keiner gesonderten Tätigkeiten, um die Verbindungselemente mit dem Getriebe nach dessen Montage am Traktor zu verbinden. Besonders zweckmäßig ist es, wenn der Tragkorb für das Getriebe auf dem Scharnierbolzen in Richtung der Schwenkachse des Scharniers verschiebbar gelagert ist, wobei ein Riementrieb zwischen der Zapfwelle des Traktors und der Antriebswelle des Getriebes angeordnet ist, dessen Riemen durch das Gewicht des Getriebes gespannt gehalten ist. Diese Ausführungsform bildet auch einen Überlastungsschutz für das Getriebe, weil bei zu großer Belastung der Riemen durchrutscht. Die Spannung des Riemens wird durch das Gewicht des Getriebes bewirkt, so daß hiefür keine zusätzlichen Elemente eingesetzt werden müssen.

In der nachfolgenden Beschreibung wird ein bevorzugtes Ausführungsbeispiel des Erfindungsgegenstandes unter Bezugnahme auf die Zeichnungen näher erläutert. Es zeigen,
Fig. 1 eine Hinteransicht eines dreischarigen Drehpfuges mit einer Antriebseinrichtung für die Zerkleinerungswerkzeuge,
Fig. 2 in schaubildlicher Darstellung die Antriebseinrichtung in gegenüber Fig. 1 größerem Maßstab,
Fig. 3 ein Detail der Antriebseinrichtung aus Fig. 2,
Fig. 4 in einer schematischen Darstellung, die Dreheinrichtung für das Grindel und die damit gekoppelte Umschalteinrichtung für das Getriebe zum Antrieb der Zerkleinerungswerkzeuge,
Fig. 5 ein Detail aus Fig. 4, gesehen in Richtung des Pfeiles P (von der Seite des Grindels),
Fig. 6 die der Fig. 5 zugeordnete Seitenansicht und
Fig. 7 schaubildlich im Detail, die Halterung des Getriebes am Traktor, wobei lediglich die für das Verständnis erforderlichen Teile dargestellt sind.

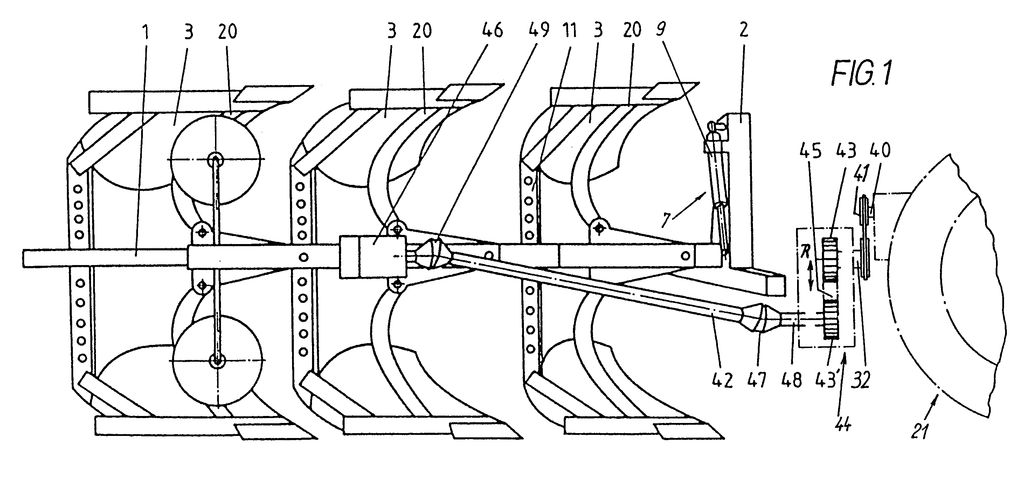

In der Zeichnung sind mit 3 die Pflugscharen - im vorliegenden Ausführungsbeispiel drei Doppelpflugscharen - bezeichnet, welche über ein Grindel 1 an einem in nicht dargestellter Weise mit dem Traktor 21 verbundenen Pfluganbaubock 2 od.dgl. drehbar verbunden sind. Jede der Pflugscharen 3 besitzt zwei einander gegenüberliegende Pflugkörper 20 bzw. den Streichblechen, die entlang von Vertikalführungen 11 wechselweise in Arbeitsstellung gebracht werden. Jeder Pflugschar 3 des Pflugkörpers 20 ist ein Zerkleinerungswerkzeug 4 zugeordnet, welches in Fig. 1 der Übersichtlichkeit halber nicht dargestellt ist. Die Zerkleinerungswerkzeuge 4 dienen zur Zerkleinerung und Verteilung der von den Pflugkörpern 20 bzw. den Streichblechen aufgeworfenen Erde und schließen an den jeweils abgesenkten Pflugkörper 20 an. Die Zerkleinerungswerkzeuge 4 sind im dargestellten Ausführungsbeispiel als Zinkenräder ausgebildet, welche auf einer ihnen gemeinsamen, antreibbaren Welle 6 sitzen, die von einer Traktorzapfwelle 40 über ein Getriebe 44, von dem nur eine Stufe dargestellt ist und das als Vor- und Rückganggetriebe ausgebildet ist, weiter über eine Antriebswelle 42 und ein weiteres Getriebe 46 angetrieben wird. Das traktorseitige Getriebe 44 ist mit der Zapfwelle 40 des Traktors 21 lösbar verbunden, sodaß es je nach Bedarf an den Traktor angesetzt oder von diesem abgenommen werden kann. Das Getriebe 44 ist darüberhinaus so ausgebildet, daß es von der Zapfwelle 40 nach unten unterhalb des Pfluganbaubocks 2 reicht, wo auch die Abtriebswelle 48 des traktorseitigen Getriebes 44 zu liegen kommt. Im vorliegenden Fall ist dieses Getriebe 44 aus zwei Kettenrädern 43, 43' und einer diese verbindenden Kette 45 aufgebaut, wobei - bei einstufiger Ausbildung des Getriebes - das obere Kettenrad 43 mit der Zapfwelle 40 des Traktors 21 und das untere Kettenrad 43' mit der Abtriebswelle 48 verbunden ist. Selbstverständlich kann außer der dargestellten und soeben beschriebenen Variante, das Getriebe 44 noch ein Vorgelege umfassen und aus Zahnrädern, Kettenrädern od.dgl. in geeigneter Kombination bestehen.

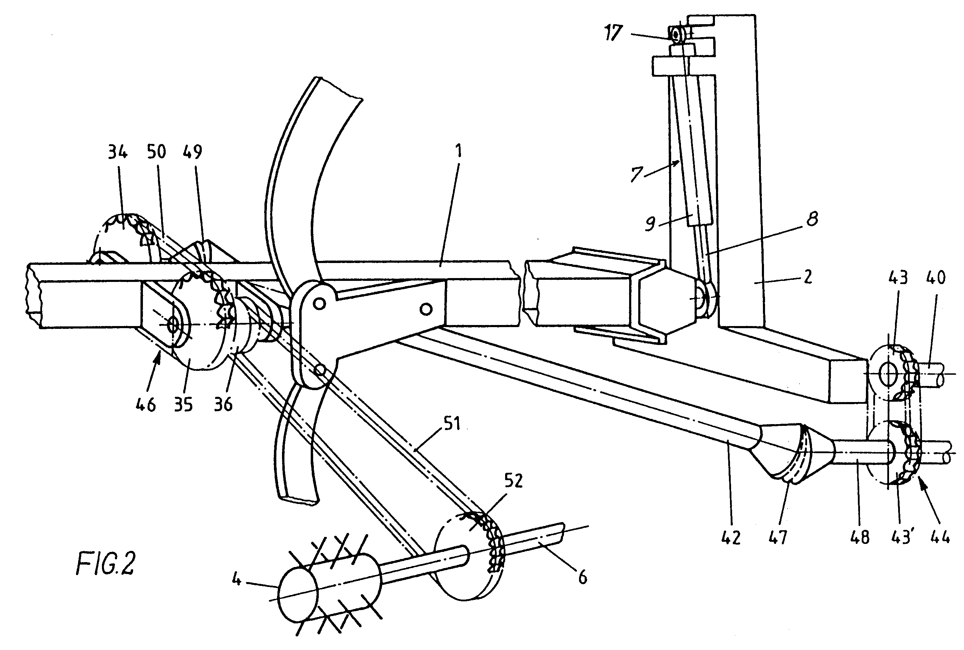

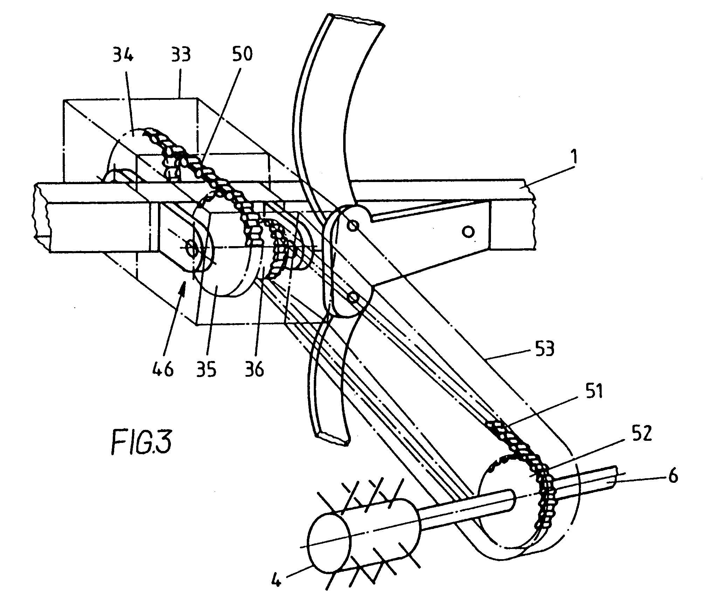

Die Abtriebswelle 48 des traktorseitigen Getriebes 44 treibt über ein Gelenk 47 die schräg nach oben verlaufende Antriebswelle 42 an, die ihrerseits über ein Gelenk 49 das Getriebe 46 antreibt, welches zu beiden Seiten des Grindels 1 je ein Kettenrad 34 bzw. 35 aufweist. Die beiden Kettenräder 34, 35 sind durch eine Kette 50 verbunden, wie dies die Fig. 2 und 3 zeigen, welche die Antriebseinrichtung für die Zerkleinerungswerkzeuge 4 in größerem Maßstab und perspektivischer Ansicht darstellen. Eines der Kettenräder des am Grindel 1 angebrachten Getriebes 46 ist antriebsmäßig mit einem weiteren Kettenrad 36 verbunden, welches über eine Kette 51 und ein weiteres Kettenrad 52 die Welle 6 der Zerkleinerungswerkzeuge 4 antreibt. Der Antrieb der Welle 6 erfolgt in der Richtung, daß die Zerkleinerungswerkzeuge 4 die zerkrümelten Erdteile von den Pflugscharen 3 wegtransportieren.

In der ein Detail der Einrichtung nach Fig. 2 darstellenden Fig. 3 sind die Ketten 50 und 51 gemäß einer vorteilhaften Ausführungsform durch Schutzgehäuse gegenüber mechanischen Beschädigungen, Eindringen von Feuchtigkeit und Staub etc. geschützt, um damit verbundene Betriebsstörungen zu vermeiden. Das Getriebe 46 mit den Kettenrädern 34, 35, 36 ist durch ein am Grindel 1 befestigtes Gehäuse 33 und die Kette 51 sowie das Kettenrad 52 auf der Welle 6 der Zerkleinerungswerkzeuge 4 durch ein längliches Gehäuse 53, welches bis zum Grindel 1 bzw. bis zum Gehäuse 33 reicht, geschützt.

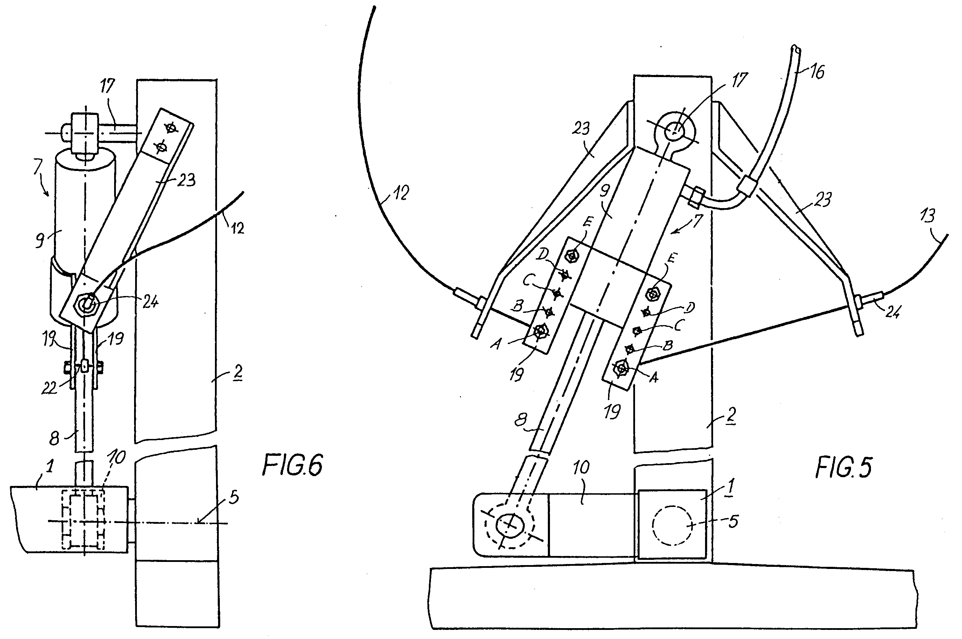

Selbstverständlich ist die Ausbildung der Zerkleinerungswerkzeuge 4 nicht auf die dargestellte Ausbildung als Zinkenräder beschränkt, sondern je nach Bodenbeschaffenheit oder anderen Kriterien sind Zinken beliebiger Ausformung, Platten, Bleche, Bürsten etc. möglich. Auch für die antriebsmäßige Verbindung der Getrieberäder innerhalb der Getriebe bzw. die Verbindung zwischen dem Getriebe 46 und der Welle 6 der Zerkleinerungswerkzeuge 4 sind nicht nur Ketten, sondern beispielsweise auch Zahnriemen od.dgl. ausführbar. Auch für die antriebsmäßige Verbindung innerhalb der Getriebe sind direkte Zahnradverbindungen möglich. Bei Drehpflügen erfolgt das Drehen des Pfluges unabhängig von der Zapfwelle, welche nur für den Drehantrieb des Zerkleinerungswerkzeuges 4 genutzt wird. Durch die Anordnung der Antriebswelle 42 unterhalb des Anbaubockes 2 frei verlaufend ist ein ausschließlich problemloses Drehen des Pfluges möglich, nicht nur bei Drehpflügen, sondern auch für Beetpflüge oder andere Pflüge. Die Schaltung des traktorseitigen Vor- und Rückganggetriebes 44 wird bei Drehpflügen automatisch beim Drehen des Pfluges ausgeführt, wobei zum Drehen des Grindels 1 um seine Längsachse 7 ein Hydraulikaggregat vorgesehen ist, dessen Zylinder 9 am Anbaubock 2 und dessen Kolbenstange am Grindel 1 über einen mit dem Grindel 1 fest verbundenen Hebel 10 angreift. Bei Beaufschlagung des Hydraulikaggregates 7 mit einem hydraulischen Medium über eine Leitung 16 wird das Grindel 1 um die Achse 5 verschwenkt. Der Zylinder 9 des Hydraulikaggregates 7 schwenkt dabei um eine Achse 17, über welche er am Pfluganbaubock 2 angelenkt ist. Am Ende der Schwenkbewegung des Grindels 1 nimmt der Zylinder 9 eine Lage ein, die zu der in Fig. 5 eingetragenen Lage bezüglich einer (gedachten), die Achsen 17 und 5 verbindenden Linie symmetrisch ist.

Um die Drehbewegung des Grindels 1 zum Umschalten der Drehrichtung des Getriebes 44 zu nutzen und dadurch die Drehrichtung der Antriebswelle 42 für die Zerkleinerungswerkzeuge 4 umzukehren, ist ein Umschaltelement 14 des Getriebes 44 mit dem Zylinder 9 des Hydraulikaggregates 7 über ein flexibles Verbindungselement 26 verbunden, welches im dargestellten Ausführungsbeispiel von zwei Seilzügen 12, 13 gebildet wird. Das Verbindungselement 26 wirkt beim Schwenken des Zylinders 9 des Hydraulikaggreates 7 und damit des Grindels 1 auf das Schaltelement 14 ein, das als Rad 15 bzw. als Scheibe ausgebildet sein kann. Das Schaltelement 14 kann in nicht dargestellter Weise auch als Hebel, als Schieber od.dgl. ausgeführt sein.

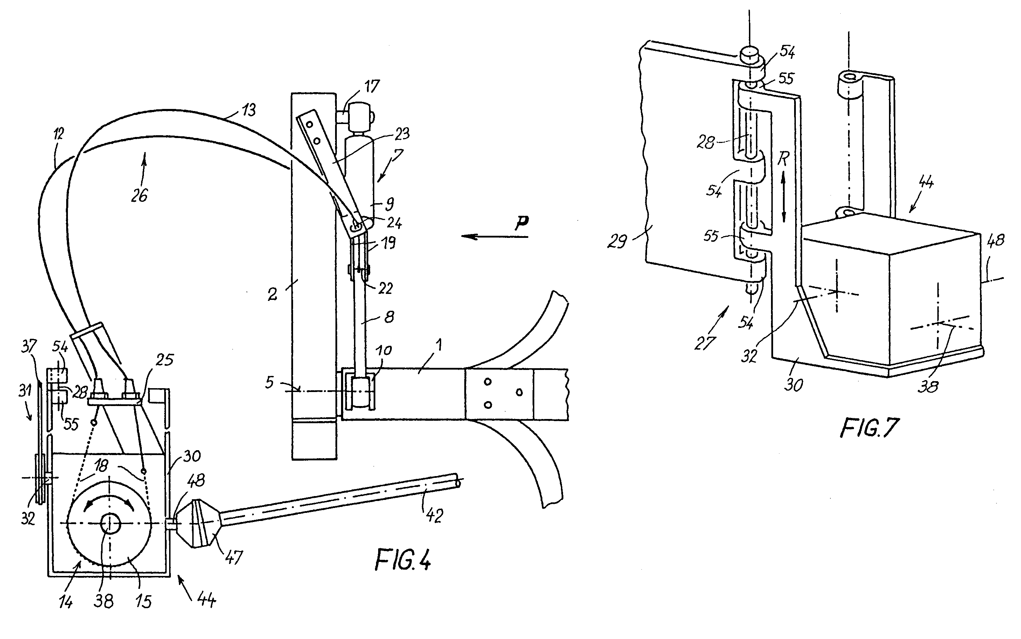

Die Schwenkbewegung des Umschaltelementes 14 um seine Achse 38 beim Schwenken des Grindels 1 ist in Fig. 4 durch einen Doppelpfeil angedeutet. Um Beschädigungen beim Umschalten des Getriebes 44 zu vermeiden, wenn in der Umschaltstufe, Zahnräder Zahn auf Zahn stehen, ist die Verbindung des Schaltelementes 14 mit den Seilzügen 12, 13 kraftschlüssig, z.B. elastisch ausgeführt, sodaß gefährliche Schaltkräfte durch die elastische Verformung der Verbindung aufgenommen werden, nicht jedoch zu einer Beschädigung des Getriebes oder einem Bruch der Verbindung führen. Im dargestellten Beispiel sind zu diesem Zweck die Seile der Seilzüge 12, 13 über ein elastisches Zwischenstück 18 verbunden, wobei dieses Zwischenstück 18 durch zwei nebeneinanderliegende Schraubenfedern gebildet sein kann, die das als Rad 15 ausgebildete Umschaltelement 14 über einen Teil des Umfanges umschlingen. Die Schraubenfedern können durch ähnliche elastische, insbes. längselastische Zwischenstücke ersetzt werden, um eine elastische Verbindung mit dem Umschaltelement des Getriebes zu erzielen.

Im dargestellten Ausführungsbeispiel sind die Seilzüge 12, 13 als Bowdenzüge ausgebildet, wobei die inneren Seile der Bowdenzüge elastisch mit dem Umschaltelement 14 des Getriebes 44 verbunden sind.

Aus Fig. 5 ist ersichtlich, daß die das flexible Verbindungselement zwischen dem Hydraulikaggregat 7 und dem Grindel 1 bildenden Seilzüge 12 und 13 wahlweise an unterschiedliche Stellen A,B,C,D,E mit dem Hydraulikzylinder 9 verbunden werden können, um den Schaltweg am Getriebe 44 auf den Weg des Hydraulikzylinders 5 während der Drehung des Grindels 1 abstimmen zu können. Zur Anbringung der Enden der Seilzüge 12, 13 - bei Bowdenzügen der Enden der äußeren Schläuche - sind am Zylinder 9 des Hydraulikaggregates 7 Laschen 19 vorgesehen, die mit Bohrungen versehen sind, durch welche Bolzen 22 hindurchgeführt werden können, in welche die Seile der Seilzüge 12 bzw 13 eingehängt sind. Wenn nun der Zylinder 9 des Hydraulikaggregates 7 beim Drehen des Grindels 1 aus der in Fig. 5 dargestellten Lage in die bezüglich der Verbindungslinie der Achsen 17 und 5 symmetrische Lage schwenkt, wird auf den Seilzug 12 ein Zug ausgeübt, der zu einer Drehung des Umschaltelementes 14 im Uhrzeigerdrehsinn Anlaß gibt (Fig. 4). Am Pfluganbaubock 2 sind zwei Streben 23 befestigt, die an einander gegenüberliegenden Seiten des Pfluganbaubockes 2 angeordnet sind und seitlich nach außen und ein Stück nach hinten (gegen die Seite des Grindels 1) ragen. Die Streben 23 sind mit Führungselementen 24 für die Seile der Seilzüge 12, 13 versehen. Dadurch werden die Enden der Seile zwischen diesen Führungselementen 24 und der Verbindungsstelle mit dem Hydraulikzylinder 9 in der Ebene von dessen Bewegung (im wesentlichen geradlinig) geführt. Die Führungselemente 24 halten die Enden der äußeren Schläuche des Bowdenzuges.

Zur lösbaren Befestigung des Getriebes 44 am Traktor 21 ist ein Scharnier 27 vorgesehen (Fig. 7). Der Scharnierbolzen 28 ist im wesentlichen vertikal angeordnet und aus den Lageraugen 54, 55 der Scharnierteile 29, 30 ausziehbar. Hiedurch kann das Getriebe auf einfache Weise durch Einstecken oder Ausziehen des Scharnierbolzens 28 mit dem Traktor 21 verbunden oder von diesem gelöst werden. Nach dem Lösen des Scharnierbolzens 28 wird das Getriebe temporär mit dem Pflug verbunden. Hiezu können Ketten benutzt werden, mit welchen das Getriebe an eine (nicht dargestellte) Tragstange gehängt wird, die an der vertikalen Säule des Anbaubockes 2 oben aufliegt und gegen Schwenken um die Auflagestelle durch eine weitere Kette gehalten wird, die am Pflug und an der Tragstange im Abstand von deren Auflagestelle an der vertikalen Säule des Anbaubockes 2 befestigt ist. Das Getriebe 44 bleibt auch nach der Trennung vom Traktor 21 über das Gelenk 47 mit der Antriebswelle 42 und auch mit den flexibel gestalteten Verbindungselementen 26 verbunden. Der Scharnierteil 29 (Fig. 7) ist fest am Traktor 21 angeordnet. Der andere Scharnierteil 30 ist als Tragkorb für das Getriebe 44 ausgebildet. Der Tragkorb für das Getriebe 44 ist auf dem Scharnierbolzen 28 in Richtung der Schwenkachse des Scharnieres 27 verschiebbar gelagert. Der Antrieb des Getriebes 44 von der Traktorzapfwelle 40 erfolgt über einen Riementrieb 31. Mit der Traktorzapfwelle 40 ist die Riemenscheibe 41 mittels einer Klemmhülse (somit lösbar) verbunden. Der Riemen 37 wird durch das Gewicht des Getriebes 44, das in Richtung des in Fig. 1 und in Fig. 7 eingetragenen Doppelpfeiles R längs des Scharnierbolzens 28 verschiebbar ist, gespannt gehalten. Die Verschiebbarkeit des Getriebes 44 gibt dabei auch Sicherheit gegen eine Überlastung, die beispielsweise bei einem Festfressen der Zerkleinerungswerkzeuge 4 auftreten könnte.

## Patentansprüche

1. Drehpflug mit mindestens einer Pflugschar (3) und mit einer Antriebseinrichtung, welche an ein mit einem an einem Traktor (21) anschließbaren Pfluganbaubock (2) od.dgl. schwenkbar verbundenes Grindel (1) angeschlossen ist, sowie mindestens einem jedem Pflugkörper jeder Pflugschar (3) furchenseitig zugeordneten Zerkleinerungswerkzeug (4), welches von einer Zapfwelle (40) des Traktors (21) über eine mit einem Getriebe (44) versehene Antriebswelle (42) antreibbar ist, dadurch gekennzeichnet, daß das Getriebe (44) zwischen dem Pfluganbaubock (2) und dem Traktor (21) angeordnet, vom Traktor (21) lösbar, angebracht ist, wobei die Abtriebswelle (48) des Getriebes (44), die gegebenenfalls tiefer als der Pfluganbaubock (2) liegt, mit der Antriebswelle (42) für das Zerkleinerungswerkzeug (4), vorzugsweise über ein Gelenk (47) antriebsmäßig verbunden ist, und daß das Getriebe (44), zur Umkehr der Drehrichtung der Antriebswelle (42) des Zerkleinerungswerkzeuges(4), über zumindest ein mit einem beim Drehen des Grindels (1) bewegten Teil (7) verbundenes flexibles Verbindungselement (26) umschaltbar ist.

2. Drehpflug nach Anspruch 1, dadurch gekennzeichnet, daß der beim Drehen des Grindels bewegte Teil als ein die Drehung des Grindels (1) um seine Längsachse bewirkendes Hydraulikaggregat (7) ausgebildet ist, das zwischen Pfluganbaubock (2) und Grindel (1) eingesetzt ist und in den unterschiedlichen Schwenklagen des Grindels (1) unterschiedliche räumliche Lagen einnimmt.

3. Drehpflug nach Anspruch 2, dadurch gekennzeichnet, daß der Zylinder (9) des Hydraulikaggregates (7) schwenkbar am Pfluganbaubock (2) oberhalb der Schwenklagerung des Grindels (1) gelagert ist und die Kolbenstange (8)des Hydraulikaggregates (7) an einem fest mit dem Grindel (1) verbundenen Hebel (10) angreift.

4. Drehpflug nach Anspruch 1 oder 2, dadurch gekennzeichnet, daß das flexible Verbindungselement (26) zum Umschalten des Getriebes von zwei Seilzügen (12, 13), Drähten od.dgl. Zugelementen gebildet ist, wobei die einen Enden der Zugelemente mit dem Hydraulikaggregat (7), vorzugsweise mit dessen Zylinder (9), an einander gegenüberliegenden Stellen des Zylinders (9) verbunden sind und mit ihren anderen Enden an einem Umschaltelement (14) des Getriebes (44), vorzugsweise elastisch angreifen.

5. Drehpflug nach Anspruch 4, dadurch gekennzeichnet, daß das Umschaltelement (14) eine Scheibe, ein Rad (15) od.dgl. ist.

6. Drehpflug nach Anspruch 4 oder 5, dadurch gekennzeichnet, daß die vom Zylinder (9) des Hydraulikaggreates (7) abliegenden Enden der Seile der beiden Seilzüge (12, 13) durch ein das Umschaltelement (14) über einen Teil seines Umfanges umschlingendes Zwischenstück (18) miteinander insbesondere elastisch verbunden sind.

7. Drehpflug nach Anspruch 6, dadurch gekennzeichnet, daß das Zwischenstück (18) durch zumindest eine, vorzugsweise zwei, nebeneinanderliegende Schraubenfedern oder ähnliche elastische Elemente gebildet ist.

8. Drehpflug nach Anspruch 1 oder 2, dadurch gekennzeichnet, daß jeder Seilzug (12, 13) als Bowdenzug ausgebildet ist, wobei der Außenmantel (Schlauch) jeweils zwischen einer vorzugsweise seitlich vom Anbaubock (2) abstehenden Lasche (19) und einer mit dem Getriebe (44) fest verbundenen Halterung (25) eingespannt ist und das Innenseil einenends mit dem bewegten Teil (7) des Pfluges, insbesondere dem Zylinder (9) des Hydraulikaggregates und andernends mit dem Schaltelement (14) des Getriebes vorzugsweise elastisch verbunden ist.

9. Drehpflug nach Anspruch 4 oder 8, dadurch gekennzeichnet, daß das Umschaltelement (14) zum Umschalten des Getriebes (44) ein Hebel, Schieber od.dgl. ist, dessen mit dem flexiblen Verbindungselement (26) verbundenes Ende im wesentlichen geradlinig verschiebbar ist.

10. Drehpflug nach Anspruch 1, dadurch gekennzeichnet, daß das flexible Verbindungselement (26) an unterschiedlichen Stellen (A,B,C,D,E) lösbar mit dem beweglichen Teil des Pfluges, insbesondere mit dem Zylinder (9) des Hydraulikaggregates (Kolben/Zylinderaggregates) (7) verbindbar ist.

11. Drehpflug nach einem der Ansprüche 1 bis 10, dadurch gekennzeichnet, daß zur lösbaren Befestigung des Getriebes (44) am Traktor (21) ein Scharnier (27) mit im wesentlichen vertikalen ausziehbaren Scharnierbolzen (28) vorgesehen ist, wobei ein Scharnierteil (29) fest mit dem Traktor (21) verbunden ist und der andere Scharnierteil (30) als Tragkorb für das Getriebe (44) ausgebildet ist (Fig. 7).

12. Drehpflug nach Anspruch 11, dadurch gekennzeichnet, daß der Tragkorb (30) für das Getriebe (44) auf dem Scharnierbolzen (28) in Richtung der Schwenkachse des Scharnieres (27) verschiebbar gelagert ist, wobei ein Riementrieb (31) zwischen der Zapfwelle (40) des Traktors (21) und der Antriebswelle (32) des Getriebes (44) angeordnet ist, dessen Riemen (37) durch das Gewicht des Getriebes (44) gespannt gehalten ist (Fig. 7).

## Claims

1. Half-turn plough with at least one ploughshare (3) and with a driving device which is connected to a plough beam (1) connected pivotably to a plough mounting bracket (2) or the like connectable to a tractor (21), and at least one breaking tool (4) which is associated with each plough body of each ploughshare (3) on the furrow side and is driveable from a power take-off shaft (40) of the tractor (21) through a driving shaft (42) provided with a gearbox (44), characterised in that the gearbox (44) is disposed between the plough mounting bracket (2) and the tractor (21) and mounted detachable from the tractor (21), the output shaft (48) of the gearbox (44), which may possibly be located lower than the plough mounting bracket (2), is connected drivewise with the driving shaft (42) for the breaking tool (4), preferably by means of a joint (47), and in that the gearbox (44), for reversal of the direction of rotation of the driving shaft (42) of the breaking tool (4), is reversible by means of at least one flexible connecting element (26) connected with a part (7) moved when the plough beam (1) is turned.

2. Half-turn plough according to claim 1, characterised in that the part moved when the plough beam is turned is embodied as a hydraulic unit (7) which turns the plough beam (1) about its longitudinal axis and is inserted between the plough mounting bracket (2) and the plough beam (1) and adopts different spatial positions in the different pivoting positions of the plough beam (1).

3. Half-turn plough according to claim 2, characterised in that the cylinder (9) of the hydraulic unit (7) is mounted pivotably on the plough mounting bracket (2) above the pivot mounting of the plough beam (1) and the piston rod (8) of the hydraulic unit (7) acts on a lever (10) connected firmly to the plough beam (1).

4. Half-turn plough according to claim 1 or 2, characterised in that the flexible connecting element (26) for reversing the gearbox is formed by two cables (12, 13), wires or similar traction elements, the traction elements being connected at one end with the hydraulic unit (7), preferably with its cylinder (9), at opposing points of the cylinder (9) and acting at their other end preferably elastically on a reversing element (14) of the transmission (44).

5. Half-turn plough according to claim 4, characterised in that the reversing element (14) is a disc, a wheel (15) or the like.

6. Half-turn plough according to claim 4 or 5, characterised in that the ends of the wires of the two cables (12, 13) remote from the cylinder (9) of the hydraulic unit (7) are connected to one another, in particular elastically, by an intermediate element (18) embracing the reversing element (14) over a part of its circumference.

7. Half-turn plough according to claim 6, characterised in that the intermediate element (18) is formed by at least one, preferably two, adjacent coil springs or similar elastic elements.

8. Half-turn plough according to claim 1 or 2, characterised in that each cable (12, 13) is embodied as a Bowden cable, the outer sheath (tube) in each case being clamped between a plate (19) preferably projecting laterally from the mounting bracket (2), and a mounting (25) connected securely to the transmission (44) and the internal cable being connected at one end with the moved part (7) of the plough, in particular the cylinder (9) of the hydraulic unit, and at the other end with the reversing element (14) of the gearbox, preferably elastically.

9. Half-turn plough according to claim 4 or 8, characterised in that the reversing element (14) for reversing the gearbox (44) is a lever, slide or the like, whose end connected with the flexible connecting element (26) is essentially displaceable in a straight line.

10. Half-turn plough according to claim 1, characterised in that the flexible connecting element (26) is detachably connectable with the moving part of the plough, in particular with the cylinder (9) of the hydraulic unit (piston and cylinder unit) (7) at different points (A, B, C, D, E).

11. Half-turn plough according to one of claims 1 to 10, characterised in that for detachable fixture of the gearbox (44) to the tractor (21) a hinge (27) is provided with essentially vertical extractable hinge pins (24), one hinge part (29) being connected firmly with the tractor (21) and the other hinge part (30) being embodied as a carrying basket for the gearbox (44) (fig. 7).

12. Half-turn plough according to claim 11, characterised in that the carrying basket (30) for the gearbox (44) is mounted on the hinge pin (28) displaceable in the direction of the pivoting axis of the hinge (27), a belt drive (31) being disposed between the power take-off shaft (40) of the tractor (21) and the input shaft (32) of the gearbox (44) whose belt (37) is held under tension by the weight of the gearbox (44) (fig. 7).

## Revendications

1. Charrue brabant avec au moins un soc (3) et avec un dispositif d'entraînement qui est relié à un age (1) relié de façon pivotante à un support porté de charrue (2) pouvant être raccordé à un tracteur (21) et avec au moins un outil de fragmentation (4) associé, côté sillon, à chaque corps de charrue de chaque soc (3) qui peut être entraîné par une prise de force (40) du tracteur (21) par l'intermédiaire d'un arbre d'entraînement (42) pourvu d'un mécanisme de transmission (44), caractérisé en ce que le mécanisme de transmission (44) est disposé entre le support porté de charrue (2) et le tracteur (21), de façon désolidarisable du tracteur (21), l'arbre mené (48) du mécanisme de transmission (44) qui se situe le cas échéant plus bas que le support porté de charrue (2) étant relié de façon menante à l'arbre menant (42) de l'outil de fragmentation (4), de préférence par une articulation (47), et en ce que le mécanisme de transmission (44) pour inverser le sens de rotation de l'arbre menant (42) de l'outil de fragmentation (4) peut être commuté par au moins un élément de liaison (26) flexible relié à une pièce (7) déplacée lors de la rotation de l'age (1).

2. Charrue brabant selon la revendication 1, caractérisée en ce que la pièce déplacée lors de la rotation de l'age est réalisée sous forme d'appareil hydraulique (7) provoquant la rotation de l'age (1) autour de son axe longitudinal, qui est placé entre le support porté de charrue (2) et l'age (1) et qui occupe, dans les différentes positions de pivotement de l'age (1), des positions spatiales différentes.

3. Charrue brabant selon la revendication 2, caractérisée en ce que le vérin (9) de l'appareil hydraulique (7) est logé de façon pivotante au support porté de charrue (2) au-dessus du logement pivotant de l'age (1), et que la tige de piston (8) de l'appareil hydraulique (7) s'applique à un levier (10) relié solidement à l'age (1).

4. Charrue brabant selon la revendication 1 ou 2, caractérisée en ce que l'élément de liaison flexible (26) pour commuter le mécanisme de transmission est constitué de deux câbles sous gaine (12, 13), fils métalliques ou éléments de traction analogues, l'une des extrémités des éléments de traction étant reliée à l'appareil hydraulique (7), de préférence au vérin (9) de celui-ci, à des endroits opposés l'un à l'autre du vérin (9), et leurs autres extrémités s'appliquant de préférence d'une manière élastique à un élément de commutation (14) du mécanisme de transmission.

5. Charrue brabant selon la revendication 4, caractérisée en ce que l'élément de commutation (14) est un disque, une roue (15) ou analogue.

6. Charrue brabant selon la revendication 4 ou 5, caractérisée en ce que les extrémités des câbles des deux câbles sous gaine (12, 13) éloignées du vérin (9) de l'appareil hydraulique (7) sont reliées les unes aux autres notamment d'une manière élastique par une pièce intermédiaire (18) entourant l'élément de commutation (14) sur une partie de son pourtour.

7. Charrue brabant selon la revendication 6, caractérisée en ce que la pièce intermédiaire (18) est constituée d'au moins un, de préférence de deux ressorts cylindriques disposés l'un à côté de l'autre ou d'éléments élastiques similaires.

8. Charrue brabant selon la revendication 1 ou 2, caractérisé en ce que chaque câble sous gaine (12, 13) est réalisé sous forme de câble Bowden, l'enveloppe extérieure (gaine) étant tendue respectivement entre une languette (19) faisant saillie de préférence latéralement du support porté (2) et un support (25) relié solidement au mécanisme de transmission (44), et en ce que le câble intérieur est relié, par une extrémité à la pièce mobile (7) de la charrue, notamment au vérin (9) de l'appareil hydraulique et par son autre extrémité à l'élément de commutation (14) du mécanisme de transmission, de préférence d'une manière élastique.

9. Charrue brabant selon la revendication 4 ou 8, caractérisée en ce que l'élément de commutation (14) pour commuter le mécanisme de transmission (44) est un levier, coulisseau ou analogue dont l'extrémité reliée à l'élément de liaison flexible (26) est déplaçable sensiblement en ligne droite.

10. Charrue brabant selon la revendication 1, caractérisée en ce que l'élément de liaison flexible (26) peut être relié à des endroits différents (A, B, C, D, E) amoviblement à la partie mobile de la charrue, notamment au vérin (9) de l'appareil hydraulique (appareil à piston/cylindre) (7).

11. Charrue brabant selon l'une des revendications 1 à 10, caractérisée en ce qu'il est prévu pour la fixation amovible du mécanisme de transmission (44) au tracteur (21) une charnière (27) avec un boulon de charnière (28) pouvant être extrait sensiblement verticalement, une partie de charnière (29) étant reliée solidement au tracteur (21) et l'autre partie de charnière (30) étant réalisée sous forme de panier porteur du mécanisme de transmission (44) (figure 7).

12. Charrue brabant selon la revendication 11, caractérisée en ce que la panier porteur (30) pour le mécanisme de transmission (44) est logé de façon déplaçable sur le boulon de charnière (28) en direction de l'axe de pivotement de la charnière (27), une commande à courroie (31) étant disposée entre la prise de force (40) du tracteur (21) et l'arbre menant (32) du mécanisme de transmission (44), dont la courroie (37) est maintenue à l'état tendu par le poids du mécanisme de transmission (44) (figure 7).
